# EUROPEAN PATENT SPECIFICATION

(11) **EP 2 819 858 B1**
(45) Date of publication and mention of the grant of the patent: **30.10.2019**
(21) Application number: 13711177.9
(22) Date of filing: 26.02.2013
(51) Int. Cl.: B60D 1/36, B60D 1/62

(54) **HITCH ALIGNMENT ASSISTANCE**
HILFE ZUR AUSRICHTUNG EINER ANHÄNGERKUPPLUNG
ASSISTANCE D'ALIGNEMENT D'ATTELAGE

(30) Priority: 29.02.2012 US 201213408266
(43) Date of publication of application: 07.01.2015
(73) Proprietor: Robert Bosch GmbH, 70469 Stuttgart (DE)
(72) Inventor: LUO, Yun, Ann Arbor MI 48105 (US); HOETZER, Dieter, 71706 Mark-groeningen (DE)
(74) Representative: DREISS Patentanwälte PartG mbB
(86) International application number: PCT/US2013/027816
(87) International publication number: WO 2013/130479

(56) References cited:
- EP-A1- 2 683 164
- EP-A2- 1 251 025
- DE-A1-102004 050 149
- US-A1- 2009 236 825
- US-A1- 2010 096 203
- US-B1- 8 038 166

## Description

### BACKGROUND

The present invention relates to systems for assisting a driver in aligning a vehicle hitch with a trailer coupler (or coupling). More specifically, the invention relates to using camera systems and other technologies to assist in aligning a vehicle hitch with a trailer coupling when connecting a vehicle and a trailer to one another.

In a passenger vehicle, the trailer hitch is usually located low on the rear of the vehicle in a position that is not visible by the driver. The trailer coupling of a trailer is located in a similarly low position. In order to connect the vehicle to the trailer, a driver must position the vehicle such that the trailer hitch is relatively close to the trailer coupling without the benefit of being able to directly view the trailer hitch, the trailer coupling, or any obstructions that may be positioned between the trailer hitch and the trailer coupling. US 2010/0096203 discloses a docking assistance system.

### SUMMARY

In one embodiment, the invention provides a system for assisting a driver in aligning a trailer hitch of a vehicle with a trailer coupling of a trailer according to the independent claim. The system includes a
camera system with a field of view behind the vehicle. A controller analyzes image data from the camera system and detects a first target affixed to the trailer coupling. The first target is of a known size and dimensions. The controller determines the location of the trailer coupling relative to the trailer hitch based on the image data and the known size and dimensions of the trailer coupling marker. The controller then determines a path of travel from the current position of the vehicle to a second position where the trailer hitch will be positioned within a predetermined threshold distance from the trailer coupling.

In some embodiments, the controller automatically controls the movement of the vehicle based on the calculated path of travel until the vehicle is in the second position. In other embodiments, the system further includes a video display that presents the image data from the camera system and instructions regarding the calculated path of travel to the driver. The camera system repeatedly updates the path of travel based on the current position of the vehicle as the vehicle moves.

In some embodiments, the system further includes a non-camera sensor system to detect objects within the calculated path of travel. The controller stops the vehicle when an object is detected in the calculated path of travel. In other embodiments, the controller calculates an updated path of travel based on objects detected in the calculated path of travel. The non-camera sensor system can take one or more forms, such as a radar system or an ultrasonic system.

Other aspects of the invention will become apparent by consideration of the detailed description and accompanying drawings.

### BRIEF DESCRIPTION OF THE DRAWINGS

Fig. 1 is a block diagram of a hitch alignment assistance system according to one embodiment.
Fig. 1A is a user interface for the hitch alignment assistance system of Fig. 1.
Fig. 2A is a perspective view of a vehicle and a trailer equipped with the hitch alignment assistance system of Fig. 1.
Fig. 2B is an overhead view of the vehicle and trailer of Fig. 2A.
Fig. 3 is a graphical representation of the relative positions of the trailer hitch and the trailer coupling as determined by the hitch alignment assistance system of Fig. 1.
Fig. 4 is an overhead view of a path traveled by a vehicle based on the determined relative positions of Fig. 3.
Fig. 5 is a flowchart of a method of determining the relative positions of the trailer hitch and the trailer coupling and moving a vehicle according to the relative positions using the hitch alignment assistance system of Fig. 1.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

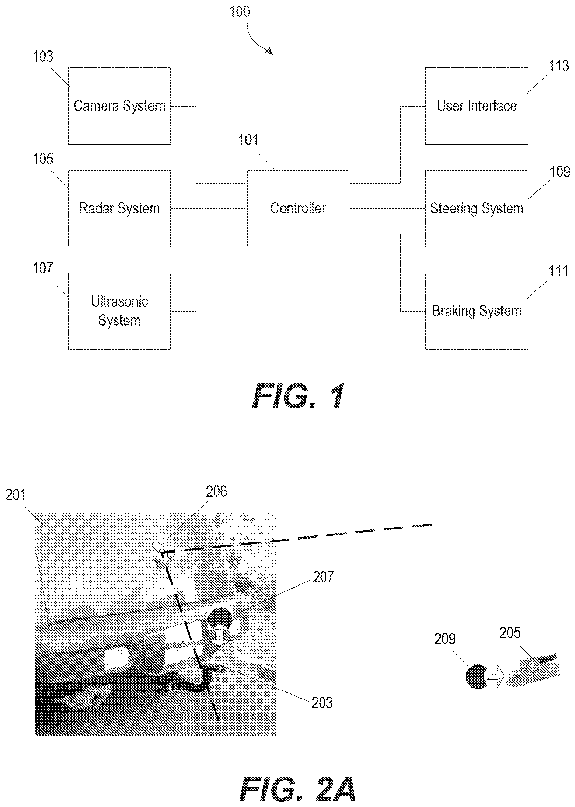

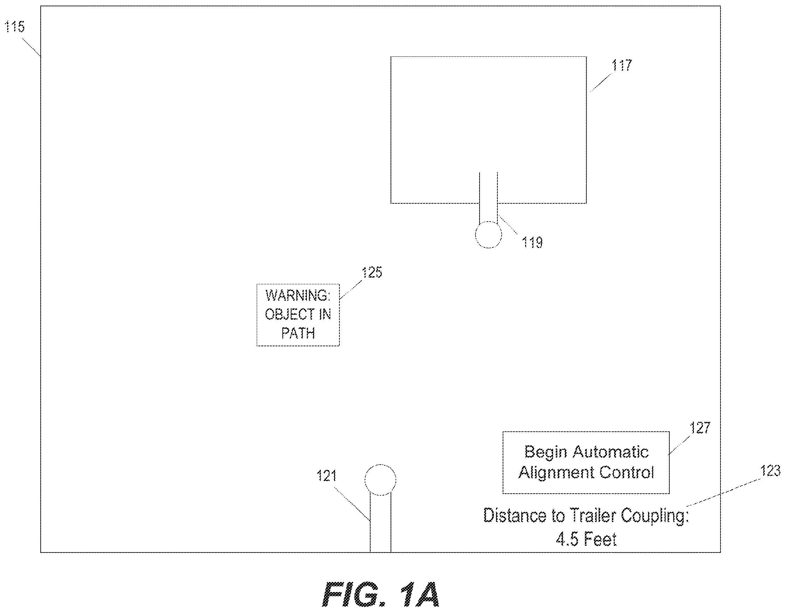

Fig. 1 illustrates a system that assists a driver in positioning a vehicle such that the trailer hitch of the vehicle is properly aligned with the trailer coupling of the trailer. The system 100 includes a controller 101 that includes a memory and a processor. The controller 101 receives input data from a camera system 103, a radar system 105, and an ultrasonic sensing system 107. The camera system 103 includes a camera and, in some constructions an imaging processing system that performs operations such as distortion correction on image data captured by the camera. Similarly, the radar system 105 and the ultrasonic sensing system 107 include a radar sensor and an ultrasound sensor, respectively, and, in some constructions, also include data processing systems. The controller 101 processes the data to determine the location of the trailer hitch of the vehicle relative to the trailer coupling of the trailer. The system then automatically actuates a steering system 109 and a braking system 111 of the vehicle to reduce the distance between the trailer hitch and the trailer coupling to within a defined range.

The controller 113 also receives input data from a user through a human-machine interface (HMI) or user interface 113 and displays information regarding the trailer alignment process. The user interface 113 includes a touch-screen display 115 as illustrated in Fig. 1A. The touch-screen display 115 shows image data received from the camera system 103. When a trailer 117 is located behind the vehicle in the field of vision of the camera system 103, the touch-screen display 115 shows the trailer 117, a trailer coupling 119 on the trailer, and the trailer hitch 121 of the vehicle. The touch-screen display 115 also communicates information to a user such as a determined distance 123 between the trailer coupling and the trailer hitch. The controller determined this distance as described below. The touch-screen display 115 also displays an objects 125 detected by the controller 101 in the path between the vehicle and the trailer 117. The touch-screen display 115 highlights detected objects and provides a warning to the user. The touch-screen display 115 also includes one or more button fields through which a user provides additional input data to the controller 101. The button field 127 illustrated in Fig. 1A allows a user to begin an automatic alignment control mode in which the controller 101 automatically moves positions the vehicle in alignment with the trailer coupling as described in detail below. Other button fields appear on the touch-screen display 115 while the controller 101 is automatically positioning the vehicle. For example, a button field is displayed allowing the user to override the automatic control mode and stop the vehicle.

In other constructions, the system 100 does not automatically actuate the steering and braking systems 109, 111 of the vehicle. Instead, the controller 101 provides video images and instructions through the touch-screen display 115 of the user interface 113. The driver of the vehicle then actuates the steering and braking systems 109, 111 of the vehicle to position the vehicle such that the trailer hitch and the trailer coupling are aligned. Furthermore, although the controller 101 is illustrated as a separate controller, in some constructions, the controller 101 of the hitch alignment assistance system 100 is incorporated into a controller of another vehicle system such as an engine control system, a cruise control system, or the steering system.

Fig. 2A shows the rear of a vehicle 201 equipped with the hitch alignment assistance system. A trailer hitch 203 is mounted on the rear of the vehicle 201. A trailer coupling 205 is mounted on a trailer (not shown). The sensing equipment of the hitch alignment assistance system (e.g., the camera system 103, the radar system 105, and the ultrasonic system 107) are also mounted to the rear of the vehicle 201 at position 206. Although Fig. 2A shows all three sensing systems mounted at the same location on the vehicle 201 (e.g., position 206), in some constructions, the sensing systems are positioned at other locations to optimize the performance of the system. For example, the camera system 103 may be positioned above the trailer hitch 203 so that the field of view of the camera system 103 captures the trailer hitch 203 (as described in further detail below). Because the radar system 105 and the ultrasonic system 107 act as safety override features to detect objects moving between the vehicle and the trailer, in some constructions, these systems are positioned lower on the rear of the vehicle 201 - for example, on the rear bumper.

In the example of Figs. 1 and 2A, the camera system 103 includes a monocular camera. It is possible to determine the angular position of imaged objects using the image data or information provided by a monocular camera system. However, it is generally not possible to determine distances (e.g., the distance between the trailer hitch of the vehicle and the coupling on the trailer using monocular camera image data). To enable the controller 101 to determine the relative locations of both the trailer hitch 203 and the trailer coupling 205, a first target object 207 is positioned on the trailer hitch 203 and a second target object 209 is positioned on the trailer coupling 205. In the system of Fig. 2A, the first target object 207 and the second target object 209 are hollow spherical objects of known size and dimension that are mounted on the trailer hitch 203 and the trailer coupling 205. Other constructions may utilize objects of other shapes and sizes. Furthermore, different target objects can be used based on lighting and environmental conditions. For example, a black spherical target may be used during bright daytime conditions while a white spherical target of the same size and dimensions is used during dimmer lighting conditions. As long as the size and dimensions of the target objects 207 and 209 are known, the controller 101 is able to accurately calculate the relative positions of both the trailer hitch 203 and the trailer coupling 205 in three-dimensional space using principles of triangulation.

Instead of using a monocular camera and two targets to provide information regarding depth or distance information, a stereo vision system that provides depth information can be used.

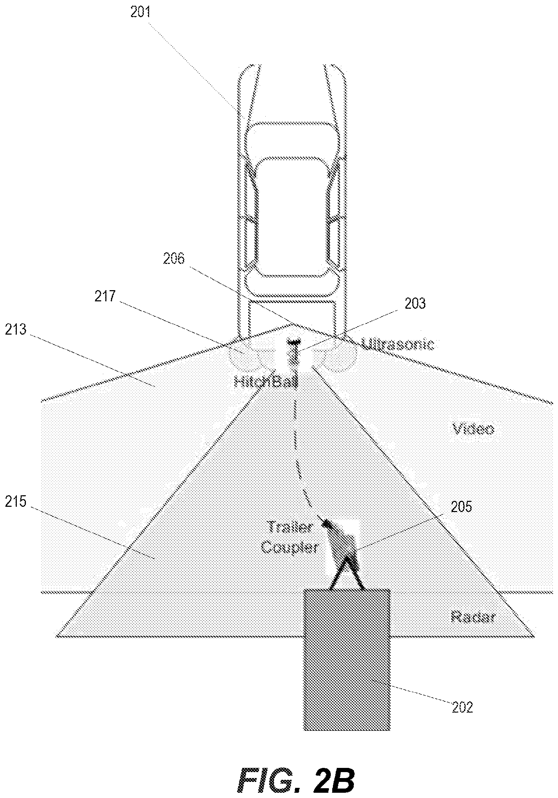

Fig. 2B is an overhead view of a vehicle 201 and a trailer 202 equipped with the trailer hitch alignment assistance system 100. Again, the trailer hitch 203 is mounted on the vehicle 201 and the trailer coupling 205 is mounted on the trailer 202. Fig. 2B also illustrates the field of view of the various sensing systems included in the trailer hitch alignment assistance system 100 at the hitch of the vehicle. In Fig. 2B, the trailer hitch 203 is mounted at the rear of the vehicle 201. Therefore, the field of view provided by the camera system 103, the radar system 105 and the ultrasonic system 107 is at the rear of the vehicle. However, in other systems, a hitch may be mounted at the front of the vehicle. In such other systems, the field of view at the hitch of the vehicle would include a field of view provided by the camera system 103, the radar system 105, and the ultrasonic system 107 is at the front of the vehicle.

The camera system 103 provides the widest field of view 213. The radar system 105 provides a field of view 215 that is more narrowly focused on the area between the vehicle 201 and the trailer 202. The ultrasonic system 107 provides a limited field of view 217 directly behind the vehicle 201.

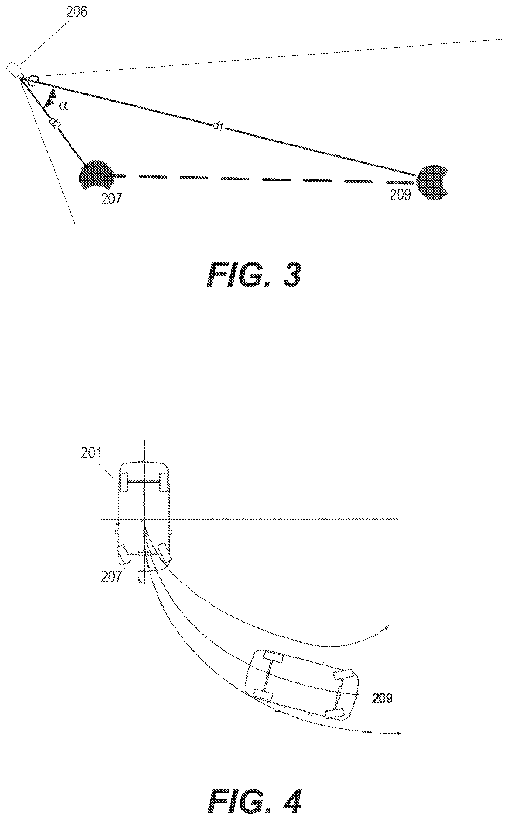

As described above, the controller 101 is able to calculate the relative position of the trailer hitch 203 and the trailer coupling 205 based on the angular position and the perceived size of a first target 207 mounted on the trailer hitch 203 and a second target 209 mounted on the trailer coupling 205. Fig. 3 illustrates the relative locations of the first target 207 and the second target 209 as determined by the controller 101 based on image data received from the camera system 103. The controller 101 identifies the second target 209 and, using principles of triangulation, the controller 101 is able to calculate the distance d1 from the location of the camera 103 to the location of the second target 209. The controller 101 also calculates the distance d2 between the camera 103 and the first target 207. The controller 101 also determines an angle α between the two targets 207, 209. The controller 101 performs these calculations in both the vertical and horizontal planes in order to identify the difference in the relative locations of the trailer hitch and the trailer coupling in three-dimensional space.

Once the controller 101 has determined the relative locations of the first target 207 and the second target 209 and, therefore, the locations of the trailer hitch 203 and the trailer coupling 205, the controller 101 calculates a path to move the vehicle such that the trailer hitch 203 is properly aligned with the trailer coupling 205. Fig. 4 illustrates an overhead view of the vehicle 201 moving from its original position to a position where the trailer hitch 203 and the trailer coupling 205 are properly aligned.

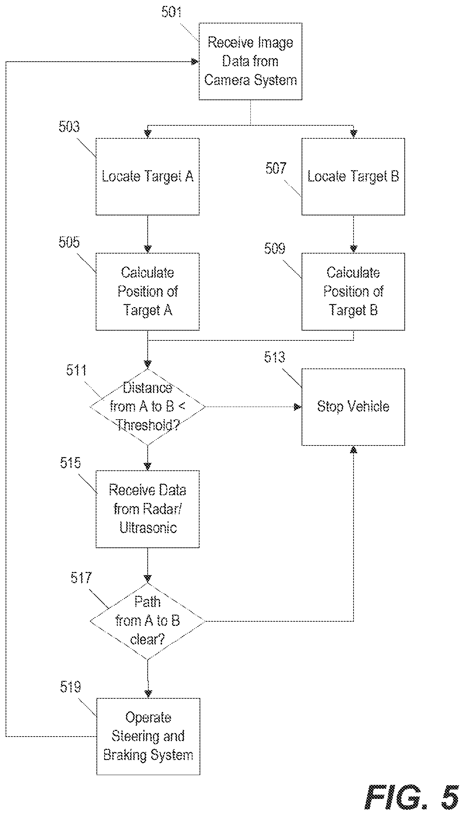

Fig. 5 illustrates one example of a process by which the controller 101 is able to properly position the vehicle such that the trailer hitch 203 is aligned with the trailer coupling 205 using the systems described above. The method of Fig. 5 is stored on the memory of controller 101 (or other computer-readable media) as computer-executable instructions that are executed by the processor of the controller 101.

The controller 101 receives image data from the camera system 103 (step 501). As described above, the controller 101 analyzes the image data to locate the first target object 207 (step 503) and then calculate the position of the first target object 207 relative to the camera system 103 (step 505). The controller 101 also locates the second target object 209 (step 507) and calculates the position of the second target object 209 relative to the camera system 103 (step 509). When the trailer hitch 203 and the camera system 103 are permanently mounted on the vehicle, the position of the trailer hitch 203 relative to the camera system 103 will not change between uses. Therefore, in some constructions, the controller 101 does not need to calculate the position of the first target object 207 each time the alignment assistance method is executed.

Once the controller 101 has determined the location of both the first target 207 and the second target 209, the controller calculates a distance between the two targets and compares that distance to a threshold (step 511). If the distance between the first target 207 and the second target 209 is less than the threshold, than the controller 101 concludes that the trailer hitch 203 and the trailer coupling 205 are properly aligned. The controller 101 stops the vehicle (step 513) and a user will be instructed to attach the trailer coupling 205 to the trailer hitch 203.

If the distance between the first target 207 and the second target 209 is greater than the threshold, the controller 101 determines that the position of the vehicle must be changed to achieve proper alignment. However, before moving the vehicle, the controller 101 analyzes available data to ensure that there are no obstructions or moving objects between the vehicle 201 and the trailer 202. The controller 101 receives data from both the radar system 105 and the ultrasonic system 107 (step 515). Together with the data from the camera system 103, the controller 101 determines if the path between the first target 207 and the second target 209 is clear (step 517). If a stationary or moving object is detected in the path, the controller 101 stops the vehicle (step 513) and instructs the user to clear the path before continuing the vehicle alignment process. If the path is clear, the controller 101 actuates the steering and braking systems to move the vehicle closer to the trailer (step 519) and, thereby, reduce the distance between the first target 207 and the second target 209.

The process illustrated in Fig. 5 is cyclical. The controller 101 repeatedly receives image data from the camera system (step 501) and updates (e.g., continuously) the calculated path of the vehicle until the distance between the first target 207 and the second target 209 is less than the threshold or until an object is detected between the vehicle and the trailer. As such, the controller 101 is able to control the vehicle along the path until the trailer hitch and coupling are in close proximity (i.e., the threshold has been reached). At that point, the hitch and coupling should be sufficiently close as to permit connection between the two (perhaps with some minor manual positional adjustments).

Thus, the invention provides, among other things, a system for positioning a vehicle such that the trailer hitch is properly aligned with the trailer coupling. As described above, in some constructions, the system controls the steering and braking systems of the vehicle to automatically position the vehicle in proper alignment. However, in other constructions, the system provides instructions to a driver in the form of textual, auditory, or other output to direct the driver how to properly position the vehicle to attain alignment of the trailer hitch and the trailer coupling. Various features and advantages of the invention are set forth in the following claims.

## Claims

1. A hitch alignment system (100) for aligning a vehicle and a trailer, the system comprising:
a camera system (103) that generates image data and has a field of view at a hitch of the vehicle;
a human-machine interface ("HMI") (113) configured to be positioned within an interior of the vehicle such that it is perceptible to a user of the vehicle; and **characterized by** a controller (101) that
analyzes the image data,
detects a first target in the image data, the first target having known dimensions and being affixed to a trailer coupling of the trailer,
determines a location of the trailer coupling relative to the hitch based on the image data and the known dimensions of the first target,
determines a path of travel from a current position of the vehicle to a second position where a distance between the hitch and the trailer coupling is less than or equal to a predetermined threshold,
operates a steering system (109) and a brake system (111) of the vehicle causing the vehicle to follow' the determined path of travel,
detects when an object is located within the determined path of travel based at least in part on data from a radar system and an ultrasonic system, and,
stops the vehicle when an object is detected in the determined path of travel.

2. The hitch alignment system (100) as claimed in claim 1, wherein the controller (101) further detects a second target in the image data, the second target having known dimensions and being affixed to a trailer hitch of the vehicle, and wherein the controller (101) determines the location of the trailer coupling relative to the hitch based on the image data, known dimensions of the first target, and the known dimensions of the second target.

3. The hitch alignment system (100) as claimed in claim 1, further comprising an input mechanism configured to be placed within an interior of the vehicle and wherein controller (101) controls the vehicle to follow the path after the input mechanism is activated by a user of the vehicle.

4. The hitch alignment system (100) as claimed in claim 1, wherein the controller (101) causes a video signal to be provided to the HMI (113), the signal causing the HMI (113) to display to the user a hitch image from the camera system (103), display a hitch-to-coupling path on the hitch image, and display at least one of a relative distance to a target location or a progress bar.

5. The hitch alignment system (100) as claimed in claim 4, wherein the HMI (113) displays steering and braking instructions to direct a user to drive the vehicle along the determined path.

6. The hitch alignment system (100) as claimed in claim 4, wherein the controller (101) further highlights the detected object on the HMI (113).

7. The hitch alignment system (100) as claimed in claim 4, wherein the HMI (113) notifies a user with at least one of a visual alert or an audible alert that the distance between the hitch and the trailer coupling is less than or equal to the predetermined threshold.

8. The hitch alignment system (100) as claimed in claim 1, wherein the first target is hollow and ball shaped.

9. The hitch alignment system (100) as claimed in claim 1, wherein the first target is illuminated.

10. The hitch alignment system (100) as claimed in claim 1, further comprising one or more sensors positioned to extend the field of view and connected in communication with the controller.

11. The hitch alignment system (100) as claimed in claim 1, wherein camera system (103) further comprises:
a stereo vision system, the stereo vision system including at least two cameras such that the distance between the trailer coupling and the hitch can be determined by a direct distance measurement without reference to a target of known dimensions

## Patentansprüche

1. Anhängerkupplungsausrichtungssystem (100), um ein Fahrzeug und einen Anhänger auszurichten, wobei das System Folgendes umfasst:
ein Kamerasystem (103), das Bilddaten erzeugt und ein Sichtfeld bei einer Anhängerkupplung des Fahrzeugs besitzt; und
eine Mensch-Maschine-Schnittstelle ("HMI") (113), die konfiguriert ist, im Inneren des Fahrzeugs positioniert zu sein, derart, dass es für einen Anwender des Fahrzeugs sichtbar ist; **gekennzeichnet durch**
eine Steuereinheit (101), die
die Bilddaten analysiert,
ein erstes Ziel in den Bilddaten detektiert, wobei das erste Ziel bekannte Abmessungen besitzt und an einer Anhängevorrichtung des Anhängers befestigt ist,
einen Ort der Anhängevorrichtung in Bezug auf die Anhängerkupplung auf der Grundlage der Bilddaten und der bekannten Abmessungen des ersten Ziels bestimmt,
einen Bewegungspfad von einer Ist-Position des Fahrzeugs zu einer zweiten Position, bei der ein Abstand zwischen der Anhängerkupplung und der Anhängevorrichtung kleiner oder gleich einem vorgegebenen Schwellenwert ist, bestimmt,
ein Lenksystem (109) und ein Bremssystem (111) des Fahrzeugs betreibt, die bewirken, dass das Fahrzeug dem bestimmten Bewegungspfad folgt,
mindestens teilweise auf der Grundlage von Daten von einem Radarsystem und einem Ultraschallsystem erfasst, wann sich ein Gegenstand im bestimmten Bewegungspfad befindet, und
das Fahrzeug anhält, wenn ein Gegenstand im bestimmten Bewegungspfad detektiert wird.

2. Anhängerkupplungsausrichtungssystem (100) nach Anspruch 1, wobei die Steuereinheit (101) ferner ein zweites Ziel in den Bilddaten detektiert, das zweite Ziel bekannte Abmessungen besitzt und an der Anhängerkupplung des Fahrzeugs befestigt ist und die Steuereinheit (101) den Ort der Anhängevorrichtung in Bezug auf die Anhängerkupplung auf der Grundlage der Bilddaten, bekannter Abmessungen des ersten Ziels und der bekannten Abmessungen des zweiten Ziels bestimmt.

3. Anhängerkupplungsausrichtungssystem (100) nach Anspruch 1, das ferner einen Eingabemechanismus umfasst, der konfiguriert ist, im Inneren des Fahrzeugs angeordnet zu werden, wobei die Steuereinheit (101) das Fahrzeug steuert, dem Pfad zu folgen, nachdem der Eingabemechanismus durch einen Anwender des Fahrzeugs aktiviert worden ist.

4. Anhängerkupplungsausrichtungssystem (100) nach Anspruch 1, wobei die Steuereinheit (101) bewirkt, dass ein Videosignal zur HMI (113) geliefert wird, und das Signal bewirkt, dass die HMI (113) dem Anwender ein Anhängerkupplungsbild vom Kamerasystem (103) anzeigt, einen Pfad von der Anhängerkupplung zur Anhängevorrichtung auf dem Anhängerkupplungsbild anzeigt und einen relativen Abstand zur einem Zielort und/oder einen Fortschrittsbalken anzeigt.

5. Anhängerkupplungsausrichtungssystem (100) nach Anspruch 4, wobei die HMI (113) Lenk- und Bremsanweisungen anzeigt, um einen Anwender zu leiten, das Fahrzeug entlang des bestimmten Pfads zu fahren.

6. Anhängerkupplungsausrichtungssystem (100) nach Anspruch 4, wobei die Steuereinheit (101) ferner den detektierten Gegenstand auf der HMI (113) hervorhebt.

7. Anhängerkupplungsausrichtungssystem (100) nach Anspruch 4, wobei die HMI (113) einen Anwender mit einem visuellen Alarm und/oder einem hörbaren Alarm benachrichtigt, dass der Abstand zwischen der Anhängerkupplung und der Anhängevorrichtung kleiner oder gleich dem vorgegebenen Schwellenwert ist.

8. Anhängerkupplungsausrichtungssystem (100) nach Anspruch 1, wobei das erste Ziel hohl und kugelförmig ist.

9. Anhängerkupplungsausrichtungssystem (100) nach Anspruch 1, wobei das erste Ziel beleuchtet ist.

10. Anhängerkupplungsausrichtungssystem (100) nach Anspruch 1, das ferner einen oder mehreren Sensoren umfasst, die derart positioniert sind, dass sie das Sichtfeld erweitern und in Kommunikation mit der Steuereinheit verbunden sind.

11. Anhängerkupplungsausrichtungssystem (100) nach Anspruch 1, wobei das Kamerasystem (103) ferner Folgendes umfasst:
ein Stereosichtsystem, wobei das Stereosichtsystem mindestens zwei Kameras enthält, so dass der Abstand zwischen der Anhängevorrichtung und der Anhängekupplung durch eine direkte Entfernungsmessung ohne Bezug zu einem Ziel bekannter Abmessungen bestimmt werden kann.

## Revendications

1. Système d'alignement de crochet d'attelage (100) pour aligner un véhicule et une remorque, système comprenant:
un système de caméra (103) qui génère des données d'image et a un champ de vision du crochet du véhicule,
une interface homme-machine HMI (113) configurée pour être positionnée à l'intérieur du véhicule de façon à être visible par l'utilisateur du véhicule, et **caractérisé par**
un contrôleur (101) qui
analyse les données d'image,
détecte une première cible dans les données d'image, cette première cible de dimensions connues étant fixée à l'attelage de la remorque,
détermine la position de l'attelage de la remorque par rapport au crochet en se fondant sur les données d'image et les dimensions connues de la première cible,
détermine un chemin, à partir la position courante du véhicule vers une seconde position dans laquelle la distance entre le crochet et l'attelage de remorque est inférieur ou égal à un seuil prédéfini,
active le système de guidage (109) et le système de freinage (111) du véhicule pour que le véhicule suive le chemin prédéfini,
détecte si un objet se trouve dans le chemin prédéfini en se fondant au moins en partie sur les données fournies par un système de radar et un système à ultrasons, et
arrête le véhicule si un objet est détecté dans le chemin prédéfini.

2. Système d'alignement de crochet d'attelage (100) selon la revendication 1, selon lequel le contrôleur (101) détecte en outre une seconde cible dans les données d'image, la seconde cible ayant des dimensions connues étant fixée au crochet du véhicule et le contrôleur (101) détermine la position de l'attelage de la remorque par rapport au crochet du véhicule en se fondant sur les données d'image, les dimensions connues de la première cible et les dimensions connues de la seconde cible.

3. Système d'alignement de crochet d'attelage (100) selon la revendication 1, comportant en outre un mécanisme d'entrée configuré pour être placé à l'intérieur du véhicule et le contrôleur (101) commande le véhicule pour suivre le chemin après activation du mécanisme d'entrée par le conducteur du véhicule.

4. Système d'alignement de crochet d'attelage (100) selon la revendication 1, selon lequel le contrôleur (101) fournit un signal vidéo à l'interface HMI (113), ce signal activant l'interface HMI (113) et affiche pour l'utilisateur, l'image du crochet fournie par le système de caméra (103), affiche le chemin entre le crochet et l'attelage sur l'image du crochet et affiche au moins une distance relative de la position de la cible ou une barre de progression.

5. Système d'alignement de crochet d'attelage (100) selon la revendication 4, selon lequel l'interface HMI (113) affiche des instructions de guidage et de freinage pour diriger l'utilisateur pour conduire le véhicule le long du chemin déterminé .

6. Système d'alignement de crochet d'attelage (100) selon la revendication 4, selon lequel le contrôleur (101) en outre met en relief l'objet détecté sur l'interface HMI (113) .

7. Système d'alignement de crochet d'attelage (100) selon la revendication 4, selon lequel l'interface HMI (113) notifie à l'utilisateur par au moins une alerte visuelle ou une alerte sonore que la distance entre le crochet et l'attelage de remorque est inférieure ou égale au seuil prédéfini.

8. Système d'alignement de crochet d'attelage (100) selon la revendication 1, selon lequel la première cible est creuse, en forme de boule.

9. Système d'alignement de crochet d'attelage (100) selon la revendication 1, selon lequel la première cible est éclairée.

10. Système d'alignement de crochet d'attelage (100) selon la revendication 1, comportant en outre un ou plusieurs capteurs placés de façon à étendre le champ de vision et reliés pour communiquer avec le contrôleur.

11. Système d'alignement de crochet d'attelage (100) selon la revendication 1, selon lequel le système de caméra (103) comporte en outre:
un système de vision stéréo, le système de vision stéréo ayant au moins deux caméras de façon à permettre de déterminer la distance entre l'attelage de la remorque et le crochet par une mesure directe de distance sans se référer à une cible de dimensions connues.
